# EUROPÄISCHE PATENTSCHRIFT

(11) **EP 3 027 359 B1**
(45) Veröffentlichungstag und Bekanntmachung des Hinweises auf die Patenterteilung: **15.01.2020**
(21) Anmeldenummer: 14747047.0
(22) Anmeldetag: 04.08.2014
(51) Int. Cl.: B24B 23/00, B24B 23/02, B24B 49/16, G01H 3/14, B23Q 17/09

(54) **ANORDNUNG MIT EINER HANDGEFÜHRTEN WERKZEUGMASCHINE UND EINER SCHRUPPSCHEIBE**
ASSEMBLY HAVING A HANDHELD POWER TOOL AND A ROUGHING DISK
ARRANGEMENT COMPRENANT UNE MACHINE-OUTIL À GUIDAGE MANUEL ET UN DISQUE DE DÉGROSSISSAGE

(30) Priorität: 02.08.2013 DE 102013108355
(43) Veröffentlichungstag der Anmeldung: 08.06.2016
(73) Patentinhaber: Rhodius Schleifwerkzeuge GmbH & Co. KG, 56659 Burgbrohl (DE)
(72) Erfinder: WOLF, Mike C., 49076 Osnabrück (DE); LICHTER, Gerald, Bornheim 53332 (DE)
(74) Vertreter: Braun-Dullaeus, Karl-Ulrich
(86) Internationale Anmeldenummer: PCT/EP2014/066742
(87) Internationale Veröffentlichungsnummer: WO 2015/015015

(56) Entgegenhaltungen:
- WO-A2-2006/066259
- WO-A2-2010/041059
- US-A1- 2012 007 748

## Beschreibung

Die Erfindung betrifft ein Verfahren zum Betreiben eines handgeführten Winkelschleifers mit einer Schruppscheibe und einen handgeführten Winkelschleifer mit einer Schruppscheibe.

Ein solcher Winkelschleifer mit einer Schruppscheibe ist aus der WO 2006/066259 A2 bekannt.

Mit einer solchen Anordnung können Werkstücke spanabhebend bearbeitet werden. An der Werkzeugmaschine, nämlich dem Winkelschleifer, ist dafür eine Schruppscheibe befestigt, insbesondere aufgespannt. Die Schruppscheibe weist eine ebene Bearbeitungsfläche auf, deren Ebene sich im Wesentlichen radial zur Drehachse der Antriebswelle Werkzeugmaschine erstreckt. Die Scheibe kann während der Bearbeitung auch verformt werden, so dass die Bearbeitungsfläche teilweise nicht mehr exakt eben ist. Es werden damit Flächen des Werkstücks bearbeitet, die im Wesentlichen parallel zur Schruppscheibe ausgerichtet sind. Über einen Elektromotor wird üblicherweise die Schruppscheibe angetrieben. An zwei Haltegriffen führt die Bedienperson die Werkzeugmaschine und führt die Bearbeitung des Werkstückes aus. Im Gegensatz dazu wird mit einer Trennscheibe in etwa radialer Richtung ein Schnitt in ein Werkstück eingebracht. Auf Anordnungen mit einer Trennscheibe bezieht sich die vorliegende Erfindung ausdrücklich nicht, vielmehr werden mit dieser Anmeldung "schruppspezifische" Probleme behandelt.

Aufgrund der handgeführten Betätigung ist die Qualität und das Arbeitsergebnis des Bearbeitungsvorgangs wesentlich verknüpft mit der Erfahrung und Handhabung der Bedienperson. Es hat sich herausgestellt, dass aufgrund fehlerhafter Bedienung schlechte Arbeitsergebnisse erzielt werden. So wird durch falsche Handhabung häufig eine zu große Menge an Schruppscheiben verschlissen, obwohl das Bearbeitungsergebnis durch korrekte Bedienung auch mit einem geringeren Verbrauch an Schruppscheiben möglich gewesen wäre. Ferner kann durch fehlerhafte Bedienung die Dauer eines Arbeitsvorganges unnötig verlängert werden. Ebenso kann durch fehlerhafte Bedienung die Oberfläche des Werkstücks beschädigt werden. Durch eine fehlerhafte Bedienung können ferner Vibrationen erzeugt werden, die gesundheitsschädlich für die Bedienperson sind; diesen Vibrationen können darf die Bedienperson nur eine gewisse Dauer ausgesetzt werden, anschließend hat die Bearbeitung zu stoppen.

Es ist daher Aufgabe der vorliegenden Erfindung, bei der schruppenden Bearbeitung von Werkstücken Optimierungen bezüglich des Arbeitsergebnisses, des Zeiteinsatzes, der Anzahl der einzusetzenden Schruppscheiben und des Personalbedarfs zu generieren. Die der Erfindung zugrundeliegende Aufgabe wird gelöst durch ein Verfahren zum Betreiben eines Winkelschleifers nach Anspruch 1 und einem Winkelschleifer nach Anspruch 7; bevorzugte Ausgestaltungen ergeben sich aus den Unteransprüchen.

Demnach umfasst die Anordnung mit einer handgeführten Werkzeugmaschine neben der Schruppscheibe ein Gehäuse, eine am Gehäuse über eine Lagerung gelagerte Antriebswelle, eine Antriebseinheit zum Antreiben der Antriebswelle, Griffe, die jeweils am Gehäuse fest angebracht sind, Befestigungsmittel zum Befestigen der Schruppscheibe an der Antriebswelle. Die Anordnung umfasst ferner ein erstes Sensormittel zum Erfassen einer Leistungsaufnahmegröße, Auswertemittel zum Auswerten der erfassten Leistungsaufnahmegröße und Ausgabemittel zum Ausgeben eines Auswerteergebnisses der Auswertung durch die Auswertemittel. Der Begriff Gehäuse ist weit zu verstehen und kann auch interne Tragstrukturen der Werkzeugmaschine umfassen. Alternativ oder in Kombination zum ersten Sensormittel zum Erfassen einer Leistungsaufnahmegröße umfasst die Anordnung einen Beschleunigungssensor zum Erzeugen von Lageänderungsinformationen, die durch die Auswertemittel ausgewertet werden.

Der Kern der Erfindung liegt insbesondere darin, dass die Arbeit an der handgeführten Werkzeugmaschine mit Schruppscheibe überwacht wird und insbesondere hinsichtlich deren Effizienz bzw. Effektivität hin untersucht wird. Grundsätzlich kann die aufgenommene Leistung dann in Relation zu einem Arbeitsergebnis gesetzt werden, beispielsweise Abtragergebnis; aufgrund der Kenntnis über die aufgenommene Leistung kann dann ermittelt werden, ob der Arbeitsvorgang optimal durchgeführt wird bzw. wurde, und ob Änderungsbedarf besteht. Der Änderungsbedarf kann dann über die Ausgabemittel der Bedienperson mitgeteilt werden. Eine einfache Form der Ausgabe kann lauten: "bitte den Winkel ändern / flacher ans Werkstück", wodurch z.B. die Abtragsleistung erhöht werden kann oder die Qualität der Oberfläche verbessert werden kann.

Der Beschleunigungssensor kann zur Überwachung der Bewegung der Werkzeugmaschine herangezogen werden. Die Bearbeitungsqualität beim Schruppen verlangt stets eine oszillierende Bewegung des Werkzeugs auf der Oberfläche. Über den Falle einer nicht ausreichenden oszillierenden Bewegung kann die Bedienperson durch einen Hinweise "Bitte stärker oszillieren" darauf aufmerksam gemacht werden.

Ferner kann der Beschleunigungssensor auch zum Überwachen der gesundheitsschädlichen Vibrationen verwendet werden. Denn diese Vibrationen sind häufig nicht per se durch die schruppenden Bearbeitung grundsätzlich bedingt, sondern vielmehr verursacht durch eine fehlerhafte bzw. suboptimale Bedienung der Werkzeugmaschine durch eine unerfahrene Bedienperson. Herkömmliche Systeme, auch gattungsfremder Werkzeugsysteme, zur Überwachung der gesundheitsschädlichen Vibrationen dokumentieren lediglich mithilfe von Sensoren das Maß der Vibrationen, der die Bedienperson ausgesetzt ist; die vorliegende Erfindung setzt sich davon ab, indem die Bedienperson aufgrund der ermittelten Vibrationen durch die erfindungsgemäße Anordnung auf eine Fehlbedienung hingewiesen wird bzw. zu einer verbesserten Arbeitsweise angeleitet wird. Da die Bedienperson so weniger gesundheitsschädlichen Vibrationen ausgesetzt wird, kann sie pro Tag deutlich länger Schrupparbeiten durchführen. Ein solcher Hinweis kann lauten: "Bitte die Maschine gegenüber dem Werkstück steiler /flacher anstellen bis die Vibrationen enden" oder "bitte stärker oszilieren".

Für die Qualität und Effizienz der schruppenden Bearbeitung von Werkstücken sind folglich die folgenden Parameter von entscheidender Bedeutung: Die Kraft, mit der die Schruppscheibe auf das Werkstück beaufschlagt wird; der Anstellwinkel der Scheibe gegenüber dem zu bearbeiteten Werkstückfläche; die Art und Intensität der der oszillierenden Bewegung, anhand der die Bearbeitung erfolgt; die Drehzahl. Für unterschiedliche Schruppscheiben und die damit zu bearbeitenden Werkstoffe können Kennfelder hinterlegt sein, in denen jeweilige optimale Parameter hinterlegt sind. Bei der Erzeugung des Auswerteergebnisses können diese hinterlegten Parameter ausgelesen werden und mit dem Ist-Zustand, der über die Sensoren erfasst wird, verglichen werden. So soll die Bedienperson anhand der ausgegebenen Auswerteergebnisse möglichst nahe an den optimalen Werten der Kennfelder geführt werden, was die entsprechend der Aufgabe gewünschte Optimierung ermöglicht. Die Drehzahl der Maschinen kann automatisch entsprechend des hinterlegten Parameters geregelt werden.

Bei der Leistungsaufnahmegröße kann es sich um jegliche Werte oder Kombination von Werten handeln, die einen Rückschluss auf den derzeitigen Energieverbrauch ermöglicht, der durch den Schruppschleifvorgang bedingt ist; beispielsweise eine Stromstärke, sofern die Maschine elektrisch angetrieben ist. Die Maschine kann aber auch pneumatisch oder hydraulisch angetrieben sein, wobei dann entsprechende Größen des energieliefernden Fluids als Leistungsaufnahmegröße herangezogen werden können. Die Auswertemittel wertet die erfasste Leistungsaufnahmegröße aus und gibt das Auswerteergebnis an die Ausgabemittel, insbesondere einen Bildschirm weiter, welche das Auswerteergebnis ausgibt.

Der Beschleunigungssensor als Bestandteil der Anordnung kann separat zur Werkzeugmaschine ausgebildet sein. So kann der Beschleunigungssensor am Arm (einschl. Hand) der Bedienperson angebracht sein, z.B. an einem Armband ähnlich eines Fitnessarmbandes. Über eine drahtlose Verbindung kann der Beschleunigungssensor mit der Auswerteeinheit verbunden sein. Alternativ kann die Auswerteeinheit im Armband oder einer sonstiges Einheit integriert sein, die an der Bedienperson angebracht ist. Eine einfache Realisierung des erfindungsgemäßen Konzeptes umfasst folglich ein speziell programmiertes Fitnessarmband mit Beschleunigungssensor, welches bei einer schruppenden Bearbeitung zur Überwachung der Bewegung verwendet wird. Eine solche Anordnung ermöglicht erfindungsgemäß sogar die Verwendung herkömmlicher Werkzeugmaschinen, ohne dass es einer Umrüstung der Maschine bedarf.

In einer besonders bevorzugten Ausgestaltung ist ein zweites Sensormittel vorgesehen, welches mechanische Belastungsgrößen, die an einer Lagerung der Antriebswelle wirken, erfasst. Die Auswertemittel werten dann die erfassten mechanischen Belastungsgrößen gemeinsam mit den erfassten Leistungsaufnahmegrößen aus. Dieser bevorzugten Ausgestaltung liegt der Gedanke zugrunde, dass insbesondere die Zusammensetzung der mechanischen Belastungsgrößen einen wesentlichen Aufschluss über die Art der Verarbeitung liefert. Wie im Ausführungsbeispiel noch näher erläutert, ist es möglich, aus den mechanischen Belastungsgrößen die Ausrichtung des Werkstücks gegenüber der Werkzeugmaschine zu ermitteln. Da eine korrekte Ausrichtung eine Grundvoraussetzung für eine qualitativ hochwertige und effiziente Bearbeitung eines Werkstücks ist, können diese erfassten Informationen nun dazu herangezogen werden, die Bedienperson gezielt für die Bearbeitung anzuleiten und eventuell zu korrigieren. Alternativ oder in Kombination dazu können dann auch die mechanischen Belastungswerte in Verbindung mit den Leistungsaufnahmewerten zu statistischen Zwecken verarbeitet werden. Diese statistischen Zwecke können zum einen für Abrechnungszwecke verwendet werden, zum anderen auch um langfristige Qualitätsuntersuchungen zu unterstützen.

Dabei ist es nicht zwingend erforderlich, dass einzelne Elemente der Anordnung zwingend an der Werkzeugmaschine angebracht sind. So ist es zwar vorteilhaft, wenn einzelne der Sensormittel (oder Teile davon) an der Maschine angebracht sind; insbesondere die Auswertemittel und die Ausgabemittel müssen nicht an der Maschine selbst angebracht sein, sondern können auch an einer entfernt angeordneten Datenverarbeitungsanordnung angebracht sein, die dann insbesondere ein Bestandteil der Anordnung ist. Diese Datenverarbeitungsanordnung kann, zumindest zeitweise, über eine Datenverbindung mit der Werkzeugmaschine verbunden sein, beispielsweise über eine Kurzstreckendatenverbindung (Bluetooth, WLAN, kabelgebunden ...), oder aber auch über eine Langstreckenverbindung, wie das Internet oder eine Telefonverbindung.

Besonders vorteilhaft ist es, wenn die Werkzeugmaschine über den Beschleunigungssensor verfügt. Dieser erfasst Beschleunigungen, denen insbesondere das Gehäuse ausgesetzt, ist und wandelt diese in Lageänderungsinformationen um. Solche Lageänderungsinformationen können hochfrequenter Art sein, welche auf Schwingungen an der Maschine hindeuten. Sollte beispielsweise die Bedienperson eine nicht optimale Ausrichtung der Maschine zum Werkstück wählen oder einen nicht korrekten Anpressdruck erzeugen, so kann die Werkzeugmaschine am Werkstück ins Rütteln geraten. Dies könnte dann abgestellt werden beispielsweise durch Änderung der Ausrichtung oder Änderung des Anpressdrucks. Diesbezügliche Korrekturinformationen können über die Ausgabemittel der Bedienperson mitgeteilt werden. Auch kann eine schlagartige Beschleunigung der Werkzeugmaschine in seitlicher Richtung darauf hindeuten, dass die Maschine seitlich ausbricht, was durch einen zu steilen Anstellwinkel bedingt sein kann. Sollte danach auch die aufgenommene Leistung zügig abfallen, so wird dieses seitliche Ausbrechen bestätigt, da in unmittelbarem Anschluss an dieses seitliche Ausbrechen die Werkzeugmaschine den Kontakt zum Werkstück verlieren wird und daher der Reibwiderstand entfällt.

Besonders vorteilhaft ist es auch, wenn die Umsetzung der vorgeschlagenen Korrekturinformationen anhand des Beschleunigungssensors überprüft wird. So kann beispielsweise die Bedienperson anhand der Korrekturinformation aufgefordert werden, die Werkzeugmaschine etwas flacher ans Werkstück zu halten, was eine Winkelbewegung erforderlich macht. Anhand des Beschleunigungssensors und der daraus erhaltenen Lageänderungsinformation kann überprüft werden, ob diese Winkeländerung auch tatsächlich durchgeführt wurde. Falls ja, kann eine Art Bestätigungssignal ausgegeben werden; falls nein, wird erneut oder dauerhaft auf die durchzuführende Winkeländerung hingewiesen, indem die Korrekturinformation erneut oder dauerhaft ausgegeben wird.

In einer bevorzugten Ausgestaltung wird die montierte Schruppscheibe von einem Sensormittel der Werkzeugmaschine oder der Anordnung erkannt. Anhand der Art der erkannten Schruppscheibe wird ein Betriebsmodus der Werkzeugmaschine ausgewählt oder eingestellt. Alternativ kann auch ein vom Benutzer gewählter Betriebsmodus überprüft wird. Das Sensormittel kann ein optischer Sensor sein, der einen auf der Schruppscheibe angebrachten Strichcode erkennen kann. Es können aber auch andere Erkennungsverfahren angewendet werden. Sollte sich die montierte Scheibe für eine Stahlbearbeitung eignen, so kann die Maschine automatisch mit einer entsprechend hohen Drehzahl betrieben werden. Alternativ kann überprüft werden, ob die vom Nutzer eingegebene Drehzahl sich für eine Stahlbearbeitung mit dieser Scheibe überhaupt eignet und ggf. eine Fehlermeldung ausgegeben werden.

In einer bevorzugten Ausgestaltung sind in der Anordnung Parameter, insbesondere in Form eines oder mehrerer Kennfelder, zu einzelnen Schruppscheiben in der Anordnung hinterlegt. Solche Parameter können insbesondere die optimale Drehgeschwindigkeit, den optimalen Anstellwinkel, die Eignung der Scheibe für einen bestimmten Werkstoff und/oder die maximale Lebensdauer einer Schruppscheibe umfassen. Die Parameter können bevorzugt aktualisiert werden, insbesondere anhand eines Verbindungsaufbaus mittels einer Datenfernverbindung (z.B. Internet) zu einer zentralen Rechnereinheit. Auch kann ein Kennfeld, anhand dessen die Auswertung erfolgt, durch die Bedienperson ausgewählt oder eingelesen werden. Wenn die Bedienperson eine neue Scheibe auf der Werkzeugmaschine befestigt kann sie der Anordnung dies mithilfe von Eingabemitteln mitteilen, beispielsweise durch manuelle Eingabe einer Typnummer der Scheibe.

Die Erfindung wird anhand der Figuren nachfolgend näher erläutert. Es zeigt
- Figur 1: eine handelsübliche Werkzeugmaschine mit einer angeschlossenen Schruppscheibe;
- Figur 2: schematisch den Aufbau einer erfindungsgemäßen Anordnung mit einer Werkzeugmaschine;
- Figur 3: die mechanischen Belastungen an der Maschine während unterschiedlicher Ausrichtungen;
- Figur 4: ein Diagramm von Arbeitsgrößen beim Betrieb der erfindungsgemäßen Anordnung.

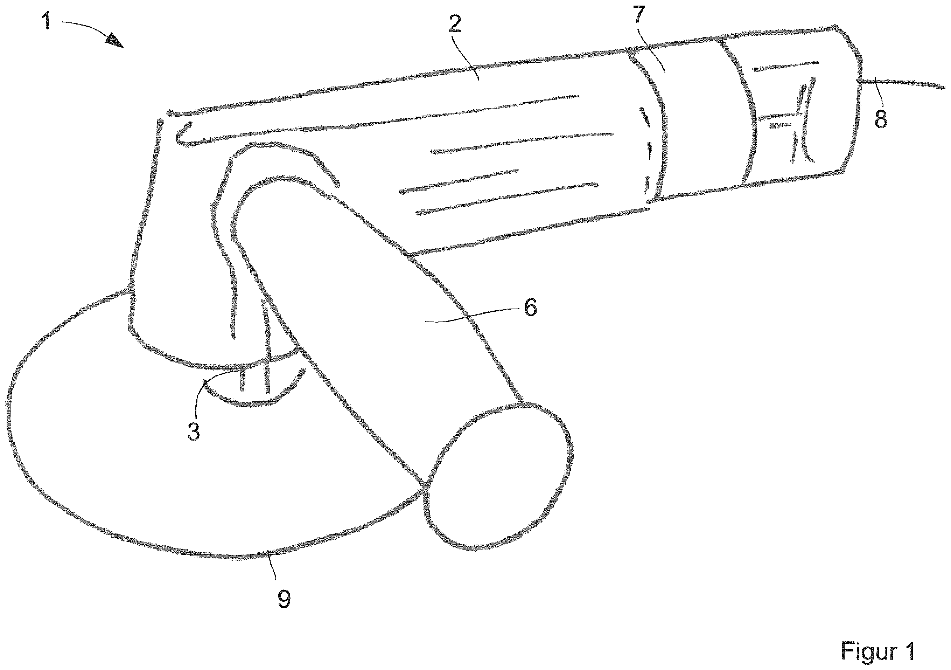

In Figur 1 ist eine bekannte Werkzeugmaschine in Form eines Winkelschleifers 1 gezeigt. Diese umfasst ein Gehäuse 2 mit Griffen 6, 7, an denen eine Bedienperson die Werkzeugmaschine während eines Arbeitsvorganges mit beiden Händen führen kann. Die Werkzeugmaschine 1 weist ferner eine Antriebswelle 3 auf, die im Gehäuse 2 gelagert ist. An der Antriebswelle 3 ist eine Schruppscheibe 9 befestigt. Über eine Stromleitung 8 erhält die Werkzeugmaschine elektrische Energie. Eine solche Werkzeugmaschine kann aber auch durch andere Energiequellen angetrieben werden, beispielsweise pneumatisch oder hydraulisch.

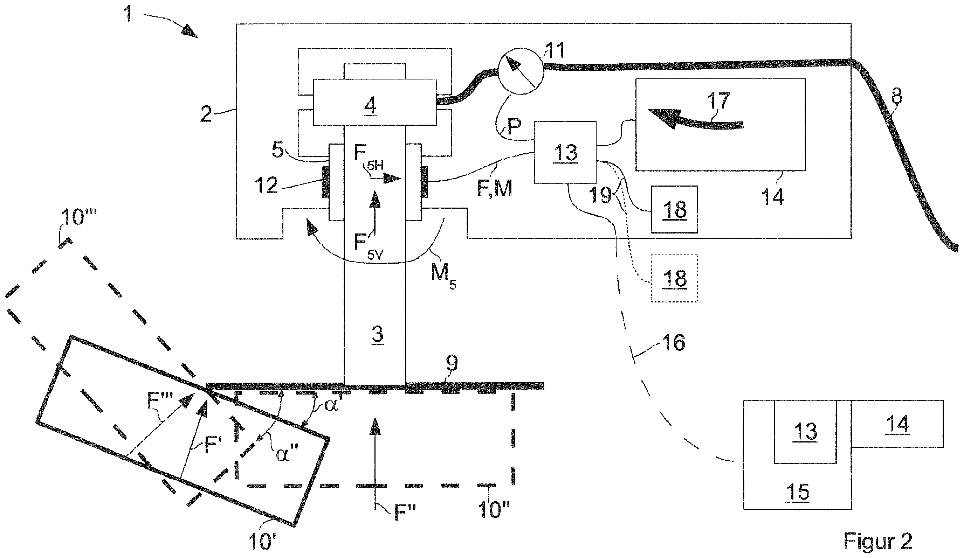

Figur 2 zeigt den schematischen Aufbau einer erfindungsgemäßen Anordnung mit einer Werkzeugmaschine 1, wobei die dort verwendete Werkzeugmaschine 1 weitgehend auf dem bekannten Winkelschleifer 1 nach Figur 1 aufbaut. In dem Gehäuse 2 ist ein Lager 5 zur Lagerung der Antriebswelle 3 gezeigt. Am Lager 5 sind Kraftsensoren 12 angeordnet, die mechanische Belastungsgrößen in Form von Kräften F₅ und Momenten M₅, die am Lager 5 wirken, erfassen können. Die Kraftsensoren können insbesondere die aufgrund der Bearbeitung am Lager auftretende vertikale Kraftkomponente F_{5V}, die horizontale Kraftkomponente F_{5V} sowie das auftretende Biegemoment M₅ erfassen. Die erfassten Belastungsgrößen F, M werden an eine Auswerteeinheit 13 weitergegeben.

Ferner ist ein Antriebsmotor 4 zu erkennen, der über die Stromleitung 8 mit elektrischer Energie versorgt wird. Ein Strommessgerät 11 ermittelt die aufgenommene Stromstärke während des Betriebes, woraus die aufgenommene Leistung P ermittelt werden kann. Die während des Betriebs erfasste Leistung P wird ebenfalls an die Auswerteeinheit 13 übermittelt.

Es ist ferner ein Beschleunigungssensor 18 fest am Gehäuse 2 angebracht, der jegliche Änderungen der Lage des Gehäuses 2 erfassen kann und daraus resultierende Lageänderungsinformationen 19 an die Auswerteeinheit 13 übermitteln kann. Unter Lageänderungsinformationen werden nicht nur Änderungen der absoluten Position, sondern auch Änderungen der Ausrichtung verstanden, also insbesondere laterale und rotatorische Beschleunigungen.

An der Auswerteeinheit 13 ist ferner ein kleiner Bildschirm 14 vorgesehen. Dieser Bildschirm 14 kann Korrekturinformationen ausgeben, die für die Bedienperson gedacht sind. Eine solche Korrekturinformation ist beispielhaft durch einen einfachen Pfeil 17 verkörpert. Die Ausgabe kann alternativ oder zusätzlich akustisch erfolgen.

Es ist nicht zwingend erforderlich, dass der Bildschirm 14 an der Maschine 2 selbst angebracht ist. Auch die Auswertung muss nicht zwangläufig in der Maschine 2 stattfinden. So kann es vorgesehen sein, dass über eine Datenverbindung 16 die Maschine 2 mit einer separaten, insbesondere stationären, Datenverarbeitungseinheit 15 verbunden ist. Auch an dieser Datenverarbeitungseinheit 15 kann die Auswerteeinheit oder eine zusätzliche Auswerteeinheit 13 vorgesehen sein. Ferner kann ein Bildschirm 14 oder ein sonstiges Ausgabemittel an der Datenverarbeitungseinheit 15 vorgesehen sein, um Auswerteergebnisse dort auszugeben. Die Datenverarbeitungseinheit kann ein PC oder Notebook sein.

Die Schruppscheibe 9 ist über nicht dargestellte, herkömmliche Befestigungsmittel mit der Antriebswelle 3 fest verbunden und dafür geeignet, am Werkstück 10 Material spanend abzutragen. Beispielhaft ist ein Werkstück 10 in drei unterschiedlichen Stellungen relativ zur Schruppscheibe 9 bzw. zur Werkzeugmaschine 1 gezeigt. Das Werkstück ist in einer ersten Stellung mit dem Bezugszeichen 10' markiert und mit einer durchgehenden Linie gezeichnet. Hierbei setzt die Schruppscheibe 9 winklig an das Werkstück 10 an, in einem Anstellwinkel α von etwa 30°. Es ist zu erkennen, dass hierdurch eine Stützkraft F' zwischen Werkstück 10' und Schruppscheibe 9 wirkt, die am Lager 5 wirkende Kraftkomponenten F_{5H}, F_{5V} sowohl in horizontaler Richtung (parallel zur Scheibe / senkrecht zur Antriebswelle) als auch in vertikaler Richtung (senkrecht zur Scheibe / parallel zur Antriebswelle) erzeugt, sowie ein Biegemoment M', welches vom Lager 5 aufzunehmen ist. Die gestrichelt dargestellten Werkstücke 10" und 10''' repräsentieren alternative relative Ausrichtungen der Scheibe 9 gegenüber dem Werkstück. Das Bezugszeichen 10" markiert das Werkstück in einer Ausrichtung, bei der die zu bearbeitende Fläche des Werkstücks parallel zur Scheibe bzw. senkrecht zur Antriebswelle 3 ausgerichtet. Das Bezugszeichen 10''' markiert das Werkstück in einer Ausrichtung, bei der die zu bearbeitende Fläche des Werkstücks in einem Anstellwinkel von etwa 60° oder mehr zur Scheibe 9 ausgerichtet ist. Die Kräfte F" und F''' betreffen dann jeweils die Anpresskräfte in den jeweiligen Zuständen.

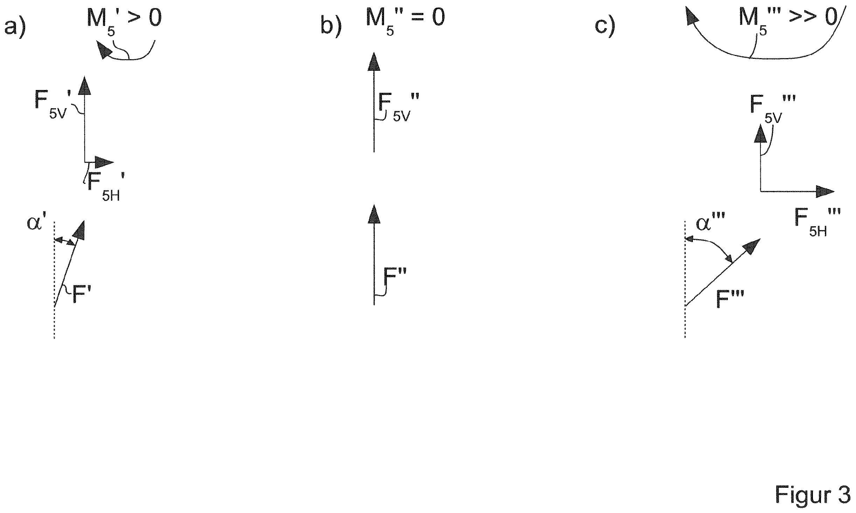

Figur 3 verdeutlicht, wie aus den mechanischen Belastungswerten auf die Ausrichtung der Scheibe gegenüber dem Werkstück geschlossen werden kann. Figur 3a zeigt unten die Kraft F', die zwischen Werkstück 10' und Scheibe 9 vorliegt. Oberhalb der Kraft F' sind die resultierenden am Lager 6 wirkenden Kraftkomponenten F_{5V}' und F_{5H}' sowie das resultierende Lagermoment M₅' dargestellt. Aus dem Verhältnis der resultierenden Kraftkomponenten F_{5V}' und F_{5H}' kann auf den Anstellwinkel α geschlossen werden.

In Figur 3b sind die resultierenden Lagerbelastungen F_{5V}" und F_{5H}" und M_{5H}" für den Fall gezeigt, dass die Scheibe 9 parallel zur zu bearbeitenden Werkstückfläche ausgerichtet ist. Es liegt keine Horizontalkraftkomponente F_{H} und auch kein Biegemoment M an der Lagerung vor, da der Anstellwinkel α gleich Null ist. Es ist ersichtlich, dass so zwar ein optimales Anliegen zwischen Scheibe und Werkstück vorliegt. Da allerdings die Flächenpressung an einzelnen Stellen des Werkstücks aufgrund der großen Anlagefläche recht gering ist, wird die Bearbeitung von einzelnen Stellen hier recht lange dauern. Die parallele Ausrichtung eignet sich insbesondere für ein großflächiges Abtragen von Material, nicht aber für eine Bearbeitung von kleinen Flächen, welche deutlich geringer sind als die Gesamtfläche der Scheibe.

Figur 3c zeigt die Kraftkomponenten am Lager F_{5V}''' und F_{5H}''' sowie das Biegemoment M₅''' am Lager für den Fall, dass die Scheibe mit einem Anstellwinkel α von 60° oder mehr gegenüber dem Werkstück gehalten ist. Es ist zu erkennen, dass die Horizontalkraftkomponente F_{5H}''' am Lager noch einmal deutlich ansteigt gegenüber der Situation gemäß Figur 3a. Ferner wächst auch das Lagermoment M₅''' deutlich an Es reduziert sich allerdings die Vertikalkraftkomponente F_{5V}'''. Aufgrund des großen Verhältnisses zwischen der Horizontalkraft und der Vertikalkraft kann auf dem recht steilen Anstellwinkel geschlossen werden. Mit solch einem steilen Anstellwinkel kann eine qualitativ hochwertige, flächige Bearbeitung nicht durchgeführt werden.

Über eine Zusammenschau der aufgenommenen Leistung P gemeinsam mit den ermittelten mechanischen Belastung F, M kann nun ermittelt werden, dass die Bedienung der handbetätigten Werkzeugmaschine 1 beispielsweise im Fall der Ausrichtung gemäß dem Werkstück 10"' nicht optimal ist. Die Auswerteeinheit berechnet nun, dass die Maschine etwas nach links verschoben und im Uhrzeigersinn gedreht werden müsste, um eine verbesserte Ausrichtung zwischen Werkstück und zu erreichen. Dies wird der Bedienperson beispielsweise durch den am Bildschirm 14 dargestellten Pfeil 17 als Korrekturinformation angezeigt. Die optimierte Ausrichtung zwischen Maschine 1 und Werkstück ist dann durch das mit dem Bezugszeichen 10' versehene und mit durchgezogenen Linien dargestellte Werkstück visualisiert. Die Kraft F' wirkt nun etwas winklig zur Antriebswelle 3; es treten im Wesentlichen geringe horizontale Kraftkomponenten F_{H} oder geringe Biegemomente M auf. Die Stützkraft, welche die Bedienperson nun aufbringen muss, wirkt nun deutlich "senkrechter" auf das Werkstück, wodurch die Bearbeitung effektiver ist.

Ob die Bedienperson die durch den Korrekturinformation korrekt umgesetzt hat kann z.B. anhand des Beschleunigungssensors 18 überprüft werden. Der Beschleunigungssensor 18 gibt Informationen 19 über Positionsänderungen und Ausrichtungsänderungen des Gehäuses aus. Anhand dieser Informationen 19 kann überprüft werden, ob das Gehäuse 2 tatsächlich entsprechend der Korrekturinformation 17 verlagert wurde. Falls ja, kann die Ausgabe der Korrekturinformation 19 beendet werden; falls nein, kann die Korrekturinformation, gegebenenfalls abgeändert, weiterhin ausgegeben werden. Alternativ oder in Kombination kann anhand des Beschleunigungssensors 18 auch ungeeignete Bewegungen der Bedienperson ermittelt werden, z.B. periodische Kippbewegungen, wodurch die Effizienz des Arbeitsschrittes reduziert ist. Ein Auswerteergebnis kann dann in einer Aufforderung an die Bedienperson liegen, die Kippbewegungen einzustellen. Ferner können Vibrationen des Gehäuses erkannt werden und evtl. durch geringfügige Änderungen der Drehzahl abgestellt werden.

Ein zu steiler Anstellwinkel zwischen Scheibe und Werkstück kann auch durch den Beschleunigungssensor ermittelt werden, allein oder in Kombination mit den mechanischen Belastungswerten. Dies kann verdeutlicht werden an der relativen Ausrichtung, die durch das Werkstück 10''' repräsentiert wird. Man erkennt, dass weniger die radial ausgerichtete Schleiffläche, sondern vielmehr die umlaufende Umfangsfläche der Scheibe 9 an dem Werkstück 10''' anliegt. Anstelle eines Schleifen kann es in einer solchen Ausrichtung zu eine Art Abrollen kommen. Hierdurch kann die gesamte Maschine 1 seitlich wegbeschleunigt werden, ähnlich eines Fahrzeugs, welches durch ein Antriebsrad beschleunigt wird. Dies würde eine Bewegung der Maschine in die Bildebene der Figur 2 hinein oder aus dieser heraus bewirken, je nach Drehrichtung. Ein solches Abrollen ist selbstverständlich unerwünscht und sollte möglichst abgestellt werden, da hierdurch eine Riefenbildung begünstigt wird und generell eine schleifende Bearbeitung unmöglich wird.

Alternativ oder Kombination kann ein Beschleunigungssensor 18 auch separat zum Gehäuse angeordnet sein, insbesondere an einem Arm der Bedienperson (z.B. an einem Armband) angebracht sein. Dann kann anhand des Beschleunigungssensors ermittelt werden, ob die Bedienperson die Werkzeugmaschine mit einer ausreichenden oszillierenden Bewegung führt. Auch können die Auswertemittel und Ausgabemittel an einem solchen Armband angeordnet sein.

Die Anordnung des Beschleunigungssensors am Gehäuse der Werkzeugmaschine hat den Vorteil, dass absolute Lageänderungen der Maschine exakt erfasst werden können. Aus diesen Lageänderungen lassen sich relative Lageänderungen gegenüber dem Werkstück herleiten.

Die Anordnung des Beschleunigungssensors am Arm der Bedienperson hat den Vorteil, dass die Bewegungen (einschließlich der Vibrationen), die tatsächlich am Arm auftreten, exakt erfasst werden können. Hinsichtlich einer relativen Lageänderung der Maschine gegenüber dem Werkstück sind diese aber nur bedingt aussagekräftig.

Als Auswerteergebnis kann auch eine statistische Zusammenstellung über den Arbeitsvorgang ggf. in Verbindung mit einer Effizienzauswertung dienen. Solch eine Zusammenstellung umfasst die Leistungsaufnahme über die Dauer eines Arbeitsvorganges, ggf. in Verbindung mit den aufgenommen Belastungswerten und den Lageänderungsinformationen. Hieraus lassen sich für die Arbeitsplanung wertvolle Erkenntnisse generieren. So können beispielsweise die aufgenommenen Werte einzelner Bedienpersonen miteinander verglichen werden. Defizite einzelner Bedienpersonen können erkannt werden und durch geeignete Schulungsmaßnahmen abgestellt werden. Eine konstante Leistungsaufnahme kann folglich eine gleichmäßige Bearbeitung bedeuten, was auch ein Maß für die Qualität einer Bearbeitung sein kann. Ferner können Auswerteergebnisse auch zu Abrechnungszwecken herangezogen werden.

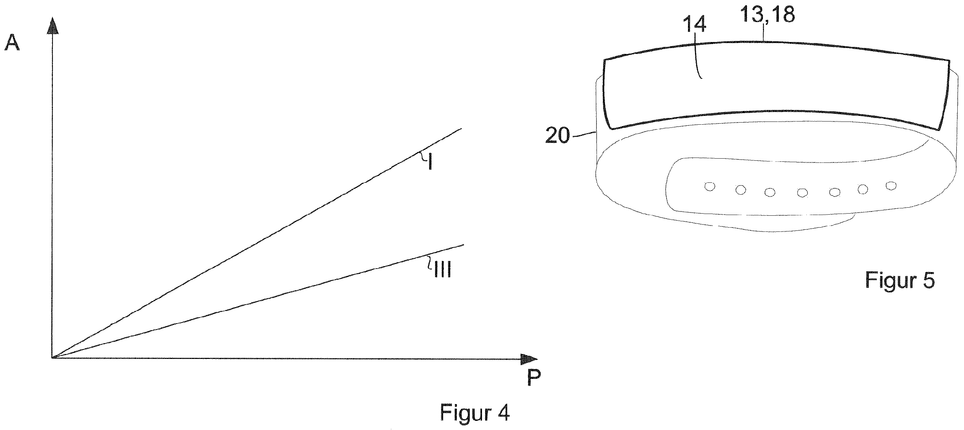

Figur 4 verdeutlicht den Zusammenhang zwischen Abtragsleistung A und aufgenommener Leistung P bei konstantem Anpressdruck und gleichbleibender Ausrichtung zwischen Werkstück 10 und Schruppscheibe 9 in den zwei möglichen Fällen I und III, die den relativen Ausrichtungen des Werkstücks zur Scheibe entsprechend der Bezugszeichen 1' bzw. 10''' entspricht. Abtragsleistung A bedeutet dabei beispielsweise die Menge des abgetragenen Materials pro Zeiteinheit, z.B. 100 g / min. Bei einem Werkstück mit gleichbleibendem Querschnitt kann diese Abtragsleistung wiederum linear zu einer Vorschubgeschwindigkeit sein.

Zunächst ist der lineare Zusammenhang zwischen Abtragsleistung gut zu erkennen. Je höher die aufgenommene Leistung P ist, desto höher ist die Abtragsleistung A, bei jeweils gleicher relativer Ausrichtung.

Die Linie I stellt die Werte im Falle der relativen Ausrichtung zwischen Maschine und Werkstück dar, wie sie in Figur 2 anhand der mit dem Bezugszeichen 10' markierten Werkstück visualisiert ist. Die Linie III stellt die Werte im Falle der relativen Ausrichtung zwischen Maschine und Werkstück dar, wie sie in Figur 2 anhand der mit dem Bezugszeichen 10''' markierten Werkstück visualisiert ist, die als weniger effizient angesehen wird.

Es ist ersichtlich, dass im Falle I bei geringerer aufgenommener Leistung P eine erhöhte Abtragsleistung A erzielt wird als im Fall III. Ferner ist das Biegemoment im Fall I nach Figur 3a deutlich geringer als Fall III nach Figur 3c; es ist folglich für die Bedienperson einfacher, die Maschine in der relativen Ausrichtung entsprechend dem Werkstück 10' als entsprechend dem Werkstück 10''' zu halten, was indirekt das Arbeitergebnis positiv beeinflusst.

Die optimale Ausrichtung (Anstellwinkel) kann grundsätzlich anhand von Kennfeldern ermittelt werden, die in der Anordnung abgespeichert sind. Solche Kennfelder können optimale Beziehungen zwischen dem Anstellwinkel, der aufgenommen Leistung und dem Anpressdruck und auch der oszillierenden Bewegung des Werkzeugs beinhalten. Solche Kennfelder können experimentell bestimmt werden.

Figur 5 zeigt eine Armband 20, das im Rahmen der vorliegenden Erfindung zur Anwendung kommen kann. Es umfasst eine Bildschirmeinheit 14, in der ferner der Beschleunigungssensor 18 und die Auswerteeinheit 13 integriert sind. Eine optionale Datenverbindung zur Werkzeugmaschine ist drahtlos hergestellt.

### Bezugszeichenliste

- 1: Winkelschleifer
- 2: Gehäuse
- 3: Antriebswelle
- 4: Antriebseinheit
- 5: Lager
- 6: erster Griff
- 7: zweiter Griff
- 8: Stromleitung
- 9: Schruppscheibe
- 10: Werkstück
- 11: Strommessgerät
- 12: Kraftsensor
- 13: Auswertemittel
- 14: Bildschirm
- 15: Datenverarbeitungseinheit
- 16: Datenverbindung
- 17: Richtungsanzeiger auf Bildschirm
- 18: Beschleunigungssensor
- 19: Lageänderungsinformationen
- 20: Armband

- F: Kraft
- M: Moment
- P: Leistung
- α: Anstellwinkel

## Patentansprüche

1. Verfahren zum Betreiben eines handgeführten Winkelschleifers (1) mit
- einem Gehäuse (2),
- einer am Gehäuse (2) über eine Lagerung (5) gelagerten Antriebswelle (3),
- einer Antriebseinheit (4) zum Antreiben der Antriebswelle (3),
- Griffen (6, 7), die jeweils am Gehäuse (2) fest angebracht sind,
- einem Befestigungsmittel zum Befestigen einer Schruppscheibe (9) an der Antriebswelle,
- einem Beschleunigungssensor (18) zum Erzeugen von Lageänderungsinformationen (19),
- einem ersten Sensormittel (11) zum Erfassen einer Leistungsaufnahmegröße (P),
- einem Auswertemittel (13) zum Auswerten der erfassten Leistungsaufnahmegröße (P) und der Lageänderungsinformationen (19),
- einem Ausgabemittel (14) zum Ausgeben eines Auswerteergebnisses der Auswertung durch das Auswertemittel (13), wobei
das Auswerteergebnis Korrekturinformationen präsentiert, die für die Bedienperson bestimmt sind, wobei die Korrekturinformationen eine Korrektur der örtlichen Ausrichtung des Winkelschleifers ermöglicht.

2. Verfahren nach Anspruch 1,
**dadurch gekennzeichnet,**
**dass** an der Lagerung (5) wirkende mechanische Belastungsgrößen (F, M) erfasst und bei der Auswertung berücksichtigt werden.

3. Verfahren nach einem der vorherigen Ansprüche,
**dadurch gekennzeichnet,**
**dass** das Auswerteergebnis Effizienzinformationen über einen Arbeitsvorgang umfassen.

4. Verfahren nach einem der vorherigen Ansprüche,
**dadurch gekennzeichnet,**
**dass** eine Korrektur der Ausrichtung anhand von Lageänderungsinformationen (19) eines Beschleunigungssensors (18) überprüft wird.

5. Verfahren nach einem der vorherigen Ansprüche,
**dadurch gekennzeichnet,**
**dass** die montierte Schruppscheibe von einem Sensormittel der Werkzeugmaschine oder der Anordnung erkannt wird, und dass anhand der Art der erkannten Schruppscheibe ein Betriebsmodus der Werkzeugmaschine ausgewählt oder eingestellt wird, oder ein vom Benutzer gewählter Betriebsmodus überprüft wird.

6. Verfahren nach einem der vorherigen Ansprüche,
**dadurch gekennzeichnet,**
**dass** Parameter zu einzelnen Schruppscheiben in einem Datenspeicher der Anordnung hinterlegt sind und zum Auswerten verwendet werden, und dass insbesondere die hinterlegten Parameter von Schruppscheiben aktualisiert werden.

7. Winkelschleifer zur Durchführung des Verfahrens nach einem der vorherigen Ansprüche mit
- einem Gehäuse (2),
- einer am Gehäuse (2) über eine Lagerung (5) gelagerten Antriebswelle (3),
- einer Antriebseinheit (4) zum Antreiben der Antriebswelle (3),
- Griffen (6, 7), die jeweils am Gehäuse (2) fest angebracht sind,
- einem Befestigungsmittel zum Befestigen einer Schruppscheibe (9) an der Antriebswelle,
- einem Beschleunigungssensor (18) zum Erzeugen von Lageänderungsinformationen (19),
- einem ersten Sensormittel (11) zum Erfassen einer Leistungsaufnahmegröße (P),
- einem Auswertemittel (13) zum Auswerten der erfassten Leistungsaufnahmegröße (P) und der Lageänderungsinformationen (19),
- einem Ausgabemittel (14) zum Ausgeben eines Auswerteergebnisses der Auswertung durch das Auswertemittel (13), wobei
das Auswerteergebnis Korrekturinformationen präsentiert, die für die Bedienperson bestimmt sind, wobei die Korrekturinformationen eine Korrektur der örtlichen Ausrichtung des Winkelschleifers ermöglicht.

8. Winkelschleifer zur Durchführung des Verfahrens nach Anspruch 7,
**gekennzeichnet durch**
ein zweites Sensormittel (12) zum Erfassen von mechanischen Belastungsgrößen (F, M), die an einer Lagerung (5) der Antriebswelle auf (3) wirken, wobei die Auswertemittel (13) geeignet sind zum gemeinsamen Auswerten der erfassten mechanischen Belastungsgrößen (F₅, M₅) und der erfassten Leistungsaufnahmegröße (P).

9. Winkelschleifer nach Anspruch 8,
**dadurch gekennzeichnet,**
**dass** die Auswertemittel (13) an der Werkzeugmaschine (1) angebracht sind.

10. Winkelschleifer nach einem der vorherigen Ansprüche 8 oder 9
**dadurch gekennzeichnet,**
**dass** Anordnung eine zur Werkzeugmaschine (1) entfernt angeordnete Datenverarbeitungsanordnung (15) umfasst, die zumindest zeitweise über eine Datenverbindung (16) mit der Werkzeugmaschine verbunden ist.

11. Winkelschleifer nach einem der vorherigen Ansprüche 8 bis 10,
**dadurch gekennzeichnet,**
**dass** die Ausgabemittel (14) an der Datenverarbeitungsanordnung (15) angeordnet sind.

## Claims

1. A method of operating a handheld angle grinder (1) with
- a housing (2),
- a drive shaft (3) borne on the housing (2) by means of a bearing (5),
- a drive unit (4) for driving the drive shaft (3),
- handles (6, 7) which are each firmly attached to the housing (2),
- fastening means for fastening a roughing disk (9) to the drive shaft,
- an acceleration sensor (18) for producing position change information (19),
- a first sensor means (11) for recording a power consumption value (P),
- evaluating means (13) for evaluating the recorded power consumption value (P) and position change information (19),
- outputting means (14) for outputting an evaluation result of the evaluation by the evaluation means (13),
wherein the evaluation result presents correction information intended for the operator, wherein the correction information allows correction of the local alignment of the angle grinder.

2. The method according to claim 1,
**characterised in that**
mechanical stress variables (F, M) acting on the bearing (5) are recorded and taken into account in the evaluation.

3. The method according to any one of the preceding claims,
**characterised in that**
the evaluation result includes efficiency information about a work process.

4. The method according to any one of the preceding claims,
**characterised in that**
a correction of the alignment is checked by means of position change information (19) from an acceleration sensor (18).

5. The method according to any one of the preceding claims,
**characterised in that**
the mounted roughing disk is recognised by a sensor means of the machine tool or the device and that on the basis of the type of the recognised roughing tool an operating mode of the machine tool is selected or set, or an operating mode selected by the user is checked.

6. The method according to any one of the preceding claims,
**characterised in that**
parameters of individual roughing disks are stored in a data memory of the device and used for evaluation, and that, in particular, the stored parameters of the roughing disks are updated.

7. An angle grinder for implementing the method according to any one of the preceding claims with
- a housing (2),
- a drive shaft (3) borne on the housing (2) by means of a bearing (5),
- a drive unit (4) for driving the drive shaft (3),
- handles (6, 7) which are each firmly attached to the housing (2),
- fastening means for fastening a roughing disk (9) to the drive shaft,
- an acceleration sensor (18) for producing position change information (19),
- a first sensor means (11) for recording a power consumption value (P),
- evaluating means (13) for evaluating the recorded power consumption value (P) and position change information (19),
- outputting means (14) for outputting an evaluation result of the evaluation by the evaluation means (13),
wherein the evaluation result presents correction information intended for the operator, wherein the correction information allows correction of the local alignment of the angle grinder.

8. The angle grinder for implementing the method according to claim 7,
**characterised by**
a second sensor means (12) for recording mechanical stress variables (F, M) that act on a bearing (5) of the drive shaft (3), wherein the evaluating means (13) are suitable for the joint evaluation of the recorded mechanical stress variables (F₅, M₅) and the recorded power consumption value (P).

9. The angle grinder according to claim 8,
**characterised in that**
the evaluating means (13) are attached to the machine tool (1).

10. The angle grinder according to any one of the preceding claims 8 or 9,
**characterised in that**
the device comprises a data processing device (15) arranged remotely in relation to the machine tool (1) which is connected to the machine tool at least at times by way of a data connection (16).

11. The angle grinder according to any one of the preceding claims 8 to 10,
**characterised in that**
the outputting means (14) are arranged on the data processing device (15).

## Revendications

1. Procédé destiné à faire fonctionner une meuleuse d'angle (1) manuelle avec
- un boîtier (2),
- un arbre d'entraînement (3) logé sur le boîtier (2) par le biais d'un logement de support (5),
- une unité d'entraînement (4) pour entraîner l'arbre d'entraînement (3),
- des poignées (6, 7), qui sont respectivement fixement montées respectivement sur le boîtier (2),
- un moyen de fixation pour fixer une meule de dégrossissage (9) sur l'arbre d'entraînement,
- un capteur d'accélération (18) pour générer des informations de variation de position (19),
- un premier moyen de détection (11) pour la saisie d'une valeur de puissance absorbée (P),
- un moyen d'évaluation (13) pour évaluer la valeur de puissance absorbée (P) saisie et les informations de variation de position (19),
- un moyen d'édition (14) pour éditer un résultat d'évaluation de l'évaluation par le moyen d'évaluation (13),
sachant que le résultat d'évaluation présente des informations de correction, qui sont déterminées pour la personne opératrice, sachant que les informations de correction permettent une correction de l'orientation locale de la meuleuse d'angle.

2. Procédé selon la revendication 1,
**caractérisé en ce que**
les valeurs de charge (F, M) mécaniques agissant sur le logement de support (5) sont saisies et prises en considération lors de l'évaluation.

3. Procédé selon l'une quelconque des revendications précédentes,
**caractérisé en ce que**
le résultat d'évaluation comprend des informations d'efficacité concernant une opération de travail.

4. Procédé selon l'une quelconque des revendications précédentes,
**caractérisé en ce qu'**
une correction de l'orientation est vérifiée à l'aide des informations de variation de position (19) d'un capteur d'accélération (18).

5. Procédé selon l'une quelconque des revendications précédentes,
**caractérisé en ce que**
la meule de dégrossissage est identifiée par un moyen de détection de la machine-outil ou du système et **en ce qu'**un mode de fonctionnement de la machine-outil est choisi ou réglé à l'aide du type de la meule de dégrossissage identifiée, ou un mode de fonctionnement choisi par l'opérateur est vérifié.

6. Procédé selon l'une quelconque des revendications précédentes,
**caractérisé en ce que**
des paramètres relatifs aux meules de dégrossissage individuelles sont mémorisés dans une mémoire de données du système et sont utilisés pour l'évaluation, et **en ce que** les paramètres mémorisés des meules de dégrossissage sont notamment actualisés.

7. Meuleuse d'angle pour l'exécution du procédé selon l'une quelconque des revendications précédentes, avec
- un boîtier (2),
- un arbre d'entraînement (3) logé sur le boîtier (2) par le biais d'un logement de support (5),
- une unité d'entraînement (4) pour entraîner l'arbre d'entraînement (3)
- des poignées (6, 7), qui sont respectivement fixement montées sur le boîtier (2),
- un moyen de fixation pour fixer une meule de dégrossissage (9) sur l'arbre d'entraînement,
- un capteur d'accélération (18) pour générer des informations de variation de position (19),
- un premier moyen de détection (11) pour la saisie d'une valeur de puissance absorbée (P),
- un moyen d'évaluation (13) pour évaluer la valeur de puissance absorbée (P) saisie et les informations de variation de position (19),
- un moyen d'édition (14) pour éditer un résultat d'évaluation de l'évaluation par le moyen d'évaluation (13),
sachant que le résultat d'évaluation présente des informations de correction, qui sont déterminées pour la personne opératrice, sachant que les informations de correction permettent une correction de l'orientation locale de la meuleuse d'angle.

8. Meuleuse d'angle pour l'exécution du procédé selon la revendication 7,
**caractérisée par**
un deuxième moyen de détection (12) pour saisir des valeurs de charge mécaniques (F, M), qui agissent sur un logement de support (5) de l'arbre d'entraînement (3), sachant que les moyens d'évaluation (13) sont adaptés pour l'évaluation commune des valeurs de charge mécaniques saisies (F₅, M₅) et de la valeur de puissance absorbée saisie (P).

9. Meuleuse d'angle selon la revendication 8,
**caractérisée en ce que**
les moyens d'évaluation (13) sont montés sur la machine-outil (1)

10. Meuleuse d'angle selon l'une quelconque des revendications 8 ou 9,
**caractérisée en ce que**
le système comprend un équipement de traitement des données (15) disposé à distance de la machine-outil (1) qui est relié au moins temporairement à la machine-outil par une liaison de données (16).

11. Meuleuse d'angle selon l'une quelconque des revendications 8 à 10,
**caractérisée en ce que**
les moyens d'édition (14) sont disposés sur le système de traitement des données (15).
